Europäisches Patentamt

European Patent Office

Office européen des brevets

(11) Publication number: **0 280 808**
**A1**

## (12) EUROPEAN PATENT APPLICATION

(21) Application number: 87309552.5

(22) Date of filing: 29.10.87

(51) Int. Cl.⁴: **F15B 13/044** , G05B 17/02 , G05D 7/06 , G05D 16/20

The title of the invention has been amended (Guidelines for Examination in the EPO, A-III, 7.3).

(30) Priority: 07.11.86 GB 8626678

(43) Date of publication of application:
07.09.88 Bulletin 88/36

(84) Designated Contracting States:
AT BE CH DE FR GB IT LI LU NL SE

(71) Applicant: **Dowty Hydraulic Units Ltd.**
**Arle Court**
**Cheltenham Gloucestershire GL51 OTP(GB)**

(72) Inventor: **Whiting, Ian Martin**
**13, Knollys End Quedgeley**
**Gloucester(GB)**

(74) Representative: **Bousfield, Roger James**
**Patents Department Dowty Group Services**
**Limited Arle Court**
**Cheltenham, Glos. GL51 0TP(GB)**

(54) **Electrohydraulically controlled proportional valves.**

(57) A control system for use with electrohydraulic proportional control valve means includes:
- a valve member;
- drive means to control the position of the valve member; and
- position sensing means for providing an electrical position signal indicative of the valve member position.

The control system further comprises input means for receiving the position signal, output means for supplying the drive signal, modelling means for determining a model signal indicative of the instantaneous flow rate and/or pressure drop across the valve means in dependence on the position signal and the drive signal, and comparison means for comparing the model signal with a demand signal indicative of a demanded flow rate and/or pressure drop across the valve means and for supplying an output signal to the output means in dependence on the result of the comparison.

FIG. 1

## "Improvements in or relating to Electrohydraulic Proportional Control Valves"

This invention relates to electrohydraulic proportional control valves and control systems therefor.

As is well known, the flow rate through an electrohydraulic proportional control valve is controlled by adjusting the position of a valve member by means of an electrical drive, the position of the valve member, and hence the throughflow cross-section of the valve, being proportional to the value of the drive current supplied to the electrical drive. However, the flow rate depends not only on the throughflow cross-section of the valve but also on the pressure drop across the valve.

Accordingly it is known to position a pressure compensator in the flow line upstream of the proportional control valve. The pressure compensator incorporates a throttling member which is controlled in dependance on pressures sensed at the input and output of the proportional control valve in order to maintain the pressure drop across the valve substantially constant.

An alternative method of compensating for the pressure drop across the proportional control valve is to position a flow measuring device in the flow line downstream of the proportional control valve. Such a device measures the flow rate at the output of the valve, which is of course dependant on the pressure drop across the valve, and supplies a feedback signal to the arrangement for driving the valve member in order to adjust the drive current for the effect of varying pressure drop across the valve.

It is an object of the invention to provide an improved control system for a proportional control valve.

According to the present invention there is provided a control system for electrohydraulic proportional control valve means having a valve member, drive means for controlling the position of the valve member in dependence on an electrical drive signal, and position sensing means for supplying an electrical position signal indicative of the position of the valve member, whereby the flow rate and pressure drop across ther valve means are functions of the drive and position signals, the control system comprising input means for receiving the position signal, output means for supplying the drive signal, modelling means for determining a model signal indicative of the instantaneous flow rate and/or pressure drop across the valve means in dependance on the position signal and the drive signal, and comparison means for comparing the model signal with a demand signal indicative of a demanded flow rate and/or pressure drop across the valve means and for supplying an output signal to the output means in dependance on the result of the comparison.

Such a control system enables accurate dynamic and steady-state control of a proportional control valve, and requires only a relatively simple valve construction.

In a preferred arrangement the control system comprises a microprocessor, in which case the input means will preferably include an analogue-to-digital converter and the output means willpreferably include a digital-to-analogue converter.

In addition to, or as an alternative to, the aforesaid modelling means, the control system may include modelling means for determining a model signal indicative of the position of the valve member in dependance on the position signal.

In addition it is preferred that the drive means comprises an electrically actuable pilot valve for controlling the position of the valve member in dependance on the electrical drive signal by varying the pressure of a pilot supply for displacing the valve member. In this case, in addition to, or as an alternative to, the aforesaid modelling means, the control system may include modelling means for determining a model signal indicative of the pilot pressure in dependance on the drive signal.

Furthermore it is preferred that the modelling means comprises calculating means for calculating the or each model signal on the basis of a calculation relating the instantaneous flow rate or pressure drop or valve member position or servo pressure to one or more of the position signal , the drive signal and the characteristics of the valve means. However, it is also possible for the modelling means to comprise memory means for storing a series of look-up values corresponding to various possible values of the position signal and/or the drive signal, and look-up means for determining the model signal on the basis of at least one look-up value in the memory means corresponding to the supplied position and/or drive signals.

The control system may additionally include selection means for selecting a model signal from amongst model signals indicative of two or more of the flow rate, the pressure drop, the valve member position and the pilot pressure for comparison with a demand signal indicative of a demanded flow rate, pressure drop, valve member position or pilot pressure, as the case may be. Such an arrangement allows the control system to be operated in a number of modes, and thus increases the flexibility and range of application of the system.

In order that the invention may be more fully understood, a control system in accordance with the invention will now be described, by way of example, with reference to the accompanying drawings, in which:

Figure 1 diagrammatically shows a control system applied to a first valve arrangement;

Figure 2 diagrammatically shows a second valve arrangement to which a control system similar to that of Figure 1 may be applied.

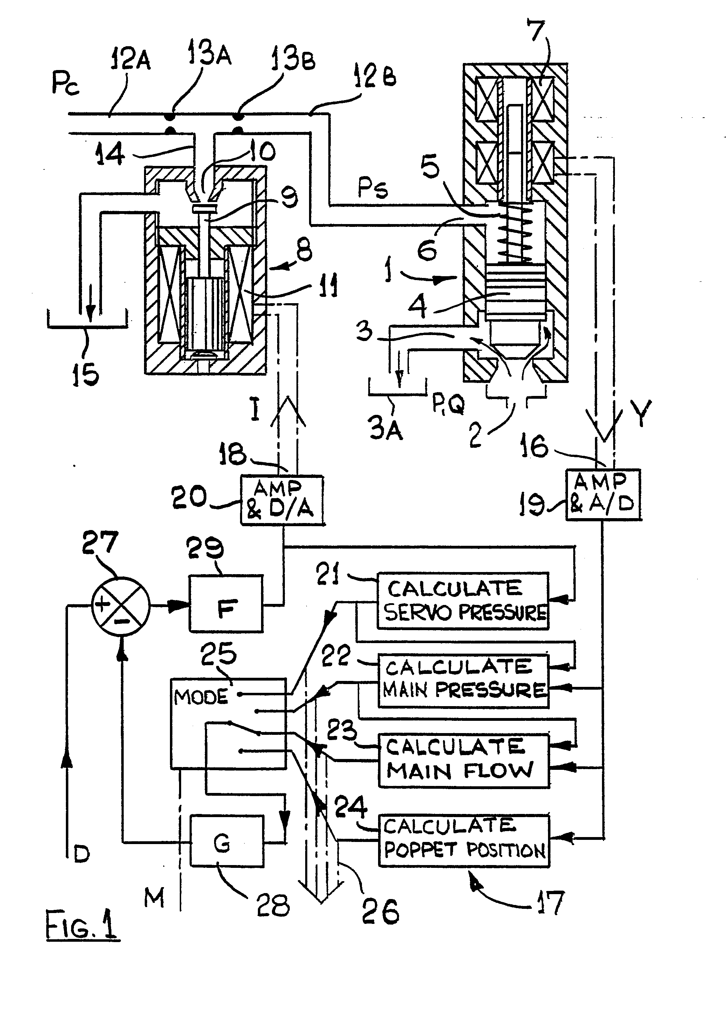

The valve arrangement of Figure 1 includes a main valve 1 having an inlet 2 for a main flow of fluid and an outlet 3 for the main fluid flow which passes to a low pressure return 3A, and a poppet 4 displaceable against a spring force provided by a spring 5 to throttle the main fluid flow in response to pressure of a servo fluid applied to a servo inlet 6. The main valve 1 also includes a position sensor 7 for sensing the position of the poppet 4 and for supplying an electrical position signal Y.

Additionally the valve arrangement includes a pressure control pilot valve 8 having a valve member 9 displaceable relative to an orifice 10 within a line 14 connected to a reservoir 15 in response to a drive signal I applied to an electromagnetic drive 11 of the pilot valve 8. Hydraulic fluid at constant pressure Pc is supplied to a restrictor 13A within a line 12A, and displacement of the valve member 9 relative the orifice 10 serves to control the pressure downstream of the restrictor 13A in proportion to the drive signal I. In addition a line 12B is connected between the line 14 and the servo inlet 6 of the main valve 1 and includes a restrictor 13B to provide damping of the flow through the line 12B. Thus servo fluid at a pressure Ps controlled by the pilot valve 8 is supplied to the poppet 4 of the main valve 1. An increase in the current of the drive signal I causes a proportional increase in the servo pressure Ps applied to the main valve 1 resulting in movement of the poppet 4 to throttle the main flow of fluid.

The output of the position sensor 7 is connected to an input 16 of a microprocessor control system 17, and an output 18 of the control system 17 is connected to the input of the electromagnetic drive 11. The control system 17 includes an analogue-to-digital converter 19 for converting the analogue position signal Y from the position sensor 7 to a digital signal and for additionally amplifying the signal, and a digital-to-analogue converter 20 for converting a digital output signal to an analogue signal forming the drive signal I supplied to the electromagnetic drive 11 and for additionally amplifying the signal.

The control system 17 additionally includes four separate calculating units 21, 22, 23 and 24. The unit 21 is provided for calculating the servo pressure Ps from the digital output signal supplied to the converter 20 which is of course directly related to the drive signal I. The calculation is performed on the basis of an expression relating Ps to I obtained by polynomial curve fitting to experimental data. Thus generally,

Ps = f ( I )

The unit 22 is provided to calculate the main pressure P across the poppet opening of the main valve 1 from the servo pressure Ps output from the unit 21 and the output of the converter 19 which is of course directly related to the position signal Y. The expression used for this calculation is based on the relationship between the main pressure P, the servo pressure Ps and the position signal Y. Thus generally,

P = f ( Ps, Y )

The unit 23 is provided to calculate the main flow rate Q through the main valve 1 from the main pressure P output by the unit 22 and the output of the converter 19 which is directly related to the position signal Y. Since the flow rate Q depends on the flow area Af and the pressure P acting across the valve, this calculation may be performed on the basis of an expression which may be expressed generally as follows,

$$Q = Cq\ Af\ \sqrt{P}$$

where Cq is a constant dependant on the characteristics of the valve and Af is of course a function of the position signal Y.

The unit 24 is provided to calculate the position of the poppet 4 from the output of the converter 19 which is directly related to the position signal Y.

The outputs of the units 21, 22, 23 and 24 are connected to a mode selector 25, as well as to a data display device (not shown) as indicated by broken line connections 26. The mode selector 25 may be actuated by a mode select signal M to connect any one of the outputs to one input of a summing junction 27 to the other input of which a demand signal D is applied. The demand signal D may be a servo pressure control signal, a main pressure control signal, a main flow control signal or a poppet position control signal at the choice of the user, and the mode select signal will be set to select the output from the appropriate one of the units 21, 22, 23 and 24 depending on the mode selected. The summing junction 27 compares the calculated signal and the demand signal and outputs a signal dependant on the difference between the two signals which is supplied to the input of the converter 20.

It will be appreciated that this feedback arrangement enables dynamic and steady state control of the valve arrangement in dependance on a demand signal D supplied by the user. Furthermore, by appropriate selection of the control mode, it is possible to control the main flow through the main valve 1 on the basis of either the servo pressure Ps or the main pressure P or the main flow rate Q or the position Y of the poppet, so that the control system can be used in a variety of applications.

A filter unit 28 connected between the mode selector 25 and the summing junction 27 applies a transfer function G,including a gain, to the calculated feedback signal. Furthermore a filter unit 29 connected between the summing junction 27 and the converter 20 applies a transfer function F, including a gain to the output signal of the summing junction 27. These units 28 and 29 provide dynamic compensation, and the speed of convergence from one demanded state to another can be easily changed by changing these units 28 and 29.

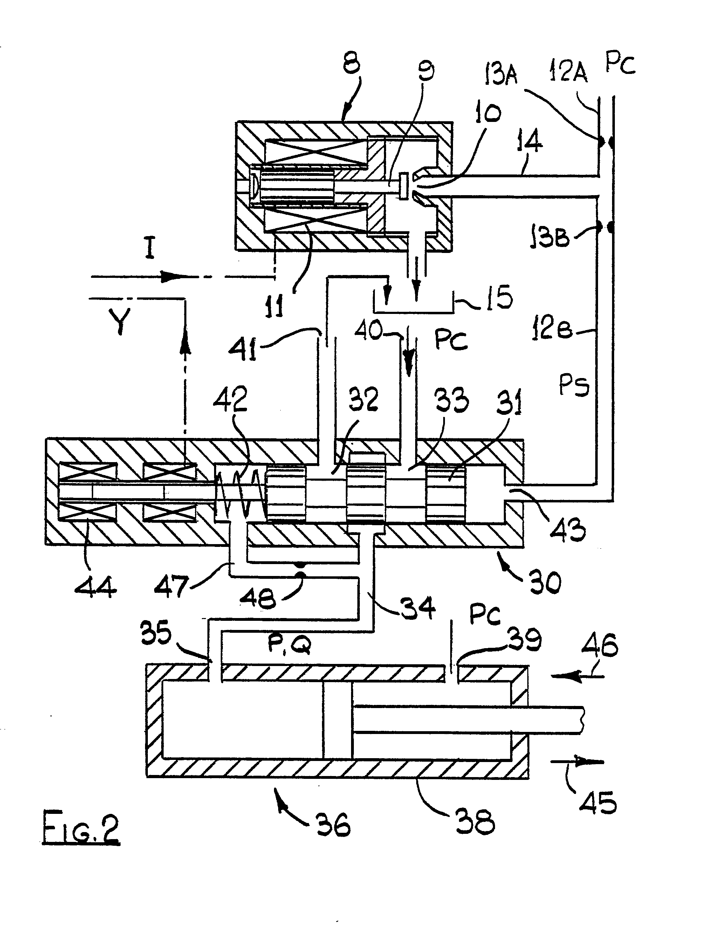

Figure 2 shows a spool valve arrangement which may be controlled by a similar control system to that described above with reference to Figure 1, but with some modification to the modelling calculations used in the units 21 to 24. In this arrangement the main valve 30 is a spool valve having a spool valve element 31 incorporating two annular recesses 32 and 33. The valve 30 has a service port 34 connected to an inlet 35 of an actuator 36 to be controlled by the valve arrangement. The actuator 36 incorporates a hydraulically actuated piston 37 within a cylinder 38, and has a further inlet 39, on the opposite side of the piston 37 to the inlet 35, which is connected to the source (not shown) of hydraulic fluid at constant pressure Pc. The valve 30 also has an inlet port 40 connected to the source of hydraulic fluid at constant pressure Pc, and a return port 41 connected to the reservoir 15.

The spool valve element 31 is displaceable against a spring force applied by a spring 42 by means of a servo fluid applied to a servo inlet 43 of the valve 30 having a servo pressure Ps controlled by the pilot valve 8 as described with reference to Figure 1. The valve 30 also includes a position sensor 44 for supplying a position signal Y indicative of the position of the valve element 31.

In operation the valve arrangement serves to control the actuator 36 (given, by way of example, as a device which may be controlled by this arrangement) by controlling the flow rate or pressure of the hydraulic fluid supplied to the inlet 35 of the actuator 36. In the null position of the valve 30 shown in Figure 2, it is arranged by appropriate design of the valve 30 that fluid is supplied to the inlet 35 at a pressure less than Pc such that the pressure forces applied to the two sides of the piston 37 balance one another and the piston 37 is maintained in equilibrium.

In order to move the piston 37 in the direction indicated by the arrow 45, the current of the drive signal I applied to the pilot valve 8 is increased so as to cause a corresponding increase in the servo pressure Ps to move the valve element 31 to the left as shown in Figure 2 to place the service port 34 increasingly in communication with the inlet port 40 by way of the recess 33. This causes fluid at the pressure P to be applied to the inlet 35 of the actuator 36, thus resulting in movement of the piston 37 in the direction of the arrow 45 in view of the greater surface area of the piston 37 on the side of the inlet 35 as compared with the surface area of the piston 37 on the side of the inlet 39.

In order to move the piston 37 in the direction indicated by the arrow 46, the current of the drive signal I of the pilot valve 8 is decreased so as to cause a corresponding decrease in the servo pressure Ps to move the valve element 31 to the right as shown in the drawing to a position in which the service port 34 is placed increasingly in communication with the return port 41 by way of the recess 32. This causes reduction of the pressure at the inlet 35 of the actuator 36 to zero, and results in movement of the piston 37 in the direction of the arrow 46 by the action of the fluid pressure Pc applied to the inlet 39.

In order to enable the pressure P at the service port 34 to be controlled, a load pressure sensing line 47 extends from the lefthand side of the valve element 31 to the service port 34 and includes a damping restrictor 48. Due to the provision of this line 47, the valve element 31 will be in equilibrium when the servo pressure Ps is balanced by the pressure P at the service port 34,the spool flow forces and the spring force applied by the spring 42. This relationship may be used in determining an expression for calculation of the pressure P in the calculating unit 22 of the control system. More particularly a calculation may be used based on the expression,

$$P = f(Ps, Y)$$

Calculation of the flow rate Q at the service port 34 in the calculation unit 23 may be performed on the basis of expressions relating the flow rate Qo out of the actuator 36 when the piston 37 is moved in the direction of the arrow 46 and the flow rate Qi into the actuator 36 when the piston 37 is moved in the direction of the arrow 45 to the pressured Pc and P and the respective flow areas Af1 and Af2 (both being functions of the position signal Y) through the valve 30 in these two states. Thus, when the piston 37 is moved in the direction of the arrow 46 and the inlet 35 is connected to return (zero pressure),

$$Qo = Cq\ Af2\ \sqrt{P}$$

and, when the piston 37 is moved in the direction of the arrow 45 and the inlet 35 is connected to the source of fluid at pressure Pc,

$$Qi = Cq\ Af1\ \sqrt{(Pc - P)}$$

where Cq is a constant dependant on the characteristics of the valve 30.

The actuator 36 may be controlled on the basis of calculated signals representing P, Q, Y or Ps dependant on the mode selected within the control system, the value of P, Q, Y or Ps being controlled to follow the appropriate demand signal D.

**Claims**

1. A control system for electrohydraulic proportional control valve means having a valve member, drive means for controlling the position of the valve member in dependence on an electrical drive signal, and position sensing means for supplying an electrical position signal indicative of the position of the valve member, whereby the flow rate and pressure drop across the valve means are functions of the drive and position signals, the control system comprising input means for receiving the position signal, output means for supplying the drive signal, modelling means for determining a model signal indicative of the instantaneous flow rate and/or pressure drop across the valve means in dependence on the position signal and the drive signal, and comparison means for comparing the model signal with a demand signal indicative of a demanded flow rate and/or pressure drop across the valve means and for supplying an output signal to the output means in dependence on the result of the comparison.

2. A comparison system as claimed in claim 1, wherein the control system includes a microprocessor.

3. A control system as claimed in claim 1 or claim 2, wherein the input means includes an analogue-to-digital converter and the output means includes a digital to analogue converter.

4. A control system as claimed in claim 1 or claim 2, wherein the input means includes a digital transducer.

5. A control system as claimed in any one of the preceding claims, in which the modelling means determines a model signal indicative of the position of the valve member in dependence on the position signal.

6. A control system as claimed in any one of the preceding claims, further comprising drive means comprises an electrically actuable pilot valve for controlling the position of the valve member in dependence on the electrical drive signal by varying the pressure of a pilot supply for displacing the valve member.

7. A control system as claimed in claim 6, in which the system includes modelling means for determining a model signal indicative of the pilot pressure in dependence on the drive signal.

8. A control system as claimed in any one of the preceding claims, in which the modelling means comprises calculating means for calculating the or each model signal on the basis of a calculation relating the instantaneous flow rate or pressure drop or valve member position or servo pressure to one or more of the position signal, the drive signal and the characteristics of the valve means.

9. A control system as claimed in any one of the preceding claims, which further includes selection means for selecting a model signal from amongst model signals indicative of two or more of the flow rate, the pressure drop, the valve member position and the pilot pressure for comparison with a demand signal indicative of a demanded flow rate, pressure drop, valve member position or pilot pressure, as the case may be.

FIG. 1

Fig.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.3) |
|---|---|---|---|
| A | DE-A-2 916 172 (HEHL)<br>* page 7, line 15 - page 9, line 7;<br>page 9, line 26 - page 13, line 28;<br>page 14, lines 28-35; figures 1-5 *<br>--- | 1,3,5,8 | F 15 B 13/044<br>G 05 B 17/02<br>G 05 D 7/06<br>G 05 D 16/20 |
| A | GB-A-2 138 969 (ISHIKAWAJIMA-HARIMA JUKOAYO)<br>* abstract; page 2, lines 19-45; claims 1-4; figures 4,5 *<br>--- | 1,2,5 | |
| A | DE-A-3 134 065 (MANNESMANN REXROTH)<br>* page 4, line 26 - page 7, line 35;<br>figure 1 *<br>--- | 6 | |
| A | DE-A-2 523 600 (BOSCH)<br>* page 2, line 17 - page 3, line 2;<br>page 4, line 29 - page 7, line 9;<br>figure 1 *<br>--- | 6,8 | |
| A | DE-A-2 151 433 (LUCAS)<br>* whole document *<br>--- | 1,5,8 | TECHNICAL FIELDS SEARCHED (Int. Cl.3) |
| A | PATENT ABSTRACTS OF JAPAN, vol. 10, no. 183 (P-472)[2239], 26th June 1986; & JP - A - 61 29913 (KUBOTA) 12-02-1986<br>----- | 8,9 | G 05 D<br>G 05 B<br>F 15 B |

The present search report has been drawn up for all claims

| Place of search | Date of completion of the search | Examiner |
|---|---|---|
| BERLIN | 24-03-1988 | BEITNER M.J.J.B. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)